# EUROPEAN PATENT APPLICATION

(11) **EP 3 236 370 A1**
(43) Date of publication of application: **25.10.2017**
(21) Application number: 17167187.8
(22) Date of filing: 20.04.2017
(51) Int. Cl.: G06F 17/30

(54) **INFORMATION FILTERING METHOD AND APPARATUS, SMART TERMINAL, COMPUTER PROGRAM AND RECORDING MEDIUM**

(30) Priority: 20.04.2016 CN 201610249092
(71) Applicant: Beijing Xiaomi Mobile Software Co., Ltd., Beijing 100085 (CN)
(72) Inventor: WANG, Yongshan, Beijing, 100085 (CN); HUO, Donghai, Beijing, 100085 (CN); LIU, Xiaotong, Beijing, 100085 (CN)
(74) Representative: Underwood, Nicolas Patrick

(57) **Abstract**

The present invention discloses an information filtering method and apparatus, a smart terminal, a computer program and a recording medium. The method comprises: calculating, based on received application information, an information display characteristic of the application information, the information display characteristic representing a display feature of the application information; determining the application information as interference information, if the information display characteristic meets an interference characteristic condition; and filtering out the application information. Using this invention, interference information can be filtered out quickly.

## Description

### TECHNICAL FIELD

The present invention relates to the field of network technology, and more particularly to an information filtering method and apparatus, a smart terminal, a computer program and a recording medium.

### BACKGROUND

Smart terminals have gradually become widely used. For example, people may use smart handsets to surf the Internet, perform social communications and go shopping. The use of smart terminals has made every aspect of people's life more convenient. Sometimes, the following case might occur. When a user acquires information using a smart terminal, he/she usually has a certain purpose, and only intends to acquire target information but is not interested in non-target information. However, sometimes non-target information is automatically sent to the user's smart terminal. The user can only passively receive such interference information and filter out the same by himself/herself in some manner (such as by manually deleting the interference information, manually skipping this information or the like). Nonetheless, the user looks forward to an information filtering method for use in a terminal to quickly filter out interference information in an application to improve the efficiency of acquiring target information.

### SUMMARY

The present invention provides an information filtering method and apparatus, a smart terminal, a computer program and a recording medium to quickly filter out interference information.

According to a first aspect of embodiments of the present invention, there is provided an information filtering method performed by a terminal, comprising: calculating, based on received application information, an information display characteristic of the application information, the information display characteristic representing a display feature of the application information; determining the application information as interference information, if the information display characteristic meets an interference characteristic condition; and filtering out the application information.

In a particular embodiment, the information display characteristic is an abstract of the application information. Determining the application information as interference information if the information display characteristic meets the interference characteristic condition comprises: comparing the abstract of the application information with stored abstracts, and determining the application information as interference information if an abstract identical to the abstract of the application information exists in the stored abstracts.

In an example, the method further comprises: storing an information file corresponding to a preset time period, the information file storing an abstract of each application information received in the preset time period. The information display characteristic meets the interference characteristic condition, if an abstract identical to the abstract of the application information is stored in the information file.

In a particular embodiment, the information display characteristic is display coordinates of the application information when the application information is displayed. Determining the application information as interference information if the information display characteristic meets the interference characteristic condition comprises: determining the application information as interference information if the display coordinates fall within a preset interference coordinate range.

In a particular embodiment, the method further comprises: acquiring historically recorded data on ranges in which target information is acquired; and obtaining the preset interference coordinate range interfering with the target information through statistical processing based on data on the ranges.

In a particular embodiment, filtering out the application information comprises: displaying a marker at a display position of the application information, the marker indicating that the application information has been received; and displaying the application information at the display position, if a display instruction from a user with respect to the marker is received.

In a particular embodiment, the application information is application information of an instant communication application.

According to a second aspect of the embodiments of the present invention, there is provided an information filtering apparatus, comprising: an information processing module configured to calculate, based on received application information, an information display characteristic of the application information, the information display characteristic representing a display feature of the application information; a filtering determining module configured to determine the application information as interference information, if the information display characteristic meets an interference characteristic condition; and a filtering module configured to filter out the application information.

In a particular embodiment, the information display characteristic is an abstract of the application information. The filtering determining module is configured to compare the abstract of the application information with stored abstracts and to determine the application information as interference information if an abstract identical to the abstract of the application information exists in the stored abstracts.

In a particular embodiment, the apparatus further comprises: an information storing module configured to store an information file corresponding to a preset time period, the information file storing an abstract of each application information received in the preset time period. The filtering determining module is configured to determine the application information as interference information if the information file has stored an abstract identical to the abstract of the application information.

In a particular embodiment, the information display characteristic is display coordinates of the application information when the application information is displayed. The filtering determining module is configured to determine the application information as interference information if the display coordinates fall within a preset interference coordinate range.

In a particular embodiment, the apparatus further comprises: a data statistics module configured to acquire historically recorded data on ranges in which target information is acquired and to obtain the preset interference coordinate range interfering with the target information through statistical processing based on the data on the ranges.

In a particular embodiment, the filtering module is configured to display a marker at a display position of the application information, the marker indicating that the application information has been received. The filtering module is further configured to display the application information at the display position, if a display instruction from a user with respect to the marker is received.

In a particular embodiment, the application information is application information of an instant communication application.

According to a third aspect of the embodiments of the present invention, there is provided a smart terminal, comprising: a processor; and a memory configured to store instructions executable by the processor. The processor is configured to: calculate, based on received application information, an information display characteristic of the application information, the information display characteristic representing a display feature of the application information; determine the application information as interference information, if the information display characteristic meets an interference characteristic condition; and filter out the application information.

In one particular embodiment, the steps of the information filtering method are determined by computer program instructions.

Consequently, according to a fourth aspect, the invention is also directed to a computer program for executing the steps of the information filtering method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of this invention can produce the following advantageous effects. By calculating an information display characteristic of application information and by determining the application information as interference information and filtering out the same if the information display characteristic meets an interference characteristic condition, interference information can be filtered out quickly.

It should be understood that both the foregoing general description and the following detailed description are only exemplary and explanatory and are not restrictive of the invention.

### BRIEF DESCRIPTION OF THE DRAWINGS

The accompanying drawings herein which are incorporated into and constitute a part of the description, illustrate the embodiments according to the present invention, and serve to explain the principles of the present invention together with the description.
Fig. 1 is a flow chart showing an information filtering method according to an exemplary embodiment.
Fig. 2 is a flow chart showing another information filtering method according to an exemplary embodiment.
Fig. 3 shows a display form of a marker according to an exemplary embodiment.
Fig. 4 is a schematic structural diagram of an information filtering apparatus according to an exemplary embodiment.
Fig. 5 is a schematic structural diagram of another information filtering apparatus according to an exemplary embodiment.
Fig. 6 is a block diagram of a smart terminal according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of devices and methods consistent with aspects related to the invention as recited in the appended claims.

An embodiment of the present invention provides an information filtering method. This method may be applied when a user acquires target information using a smart terminal, to automatically and quickly filter out interference information affecting the user's efficiency of acquiring the target information and hence improve the speed of acquiring the target information.

For example, this method may be applied to in the following scene. Taking an example where the smart terminal is a handset, the user may chat with many others using instant communication software and may receive instant communication application information sent by the others in the chatting process. Among these received application information, the user may aim to obtain only some specific application information (which may be referred to as target information of interest to the user) but may not care about other information. However, the user may still have to passively receive and view other information. In contrast, the instant communication software can quickly help the user to filter out non-target interference information, if it uses the information filtering method of this embodiment.

The specific application information which the user wants to obtain may be, for example, a red envelop (with money inside). For example, when grabbing a red envelop, the user tends to focus only on the red envelop so as to grab the red envelop as fast as possible. Information other than the red envelop may be taken as interference information, which the user wants to filter out so as to avoid interfering with his/her grabbing the red envelop. In the following, the information filtering method of this embodiment will be described by taking, as an example, a scene where many people chat and grab red envelops using the instant communication application. However, it can be understood that the application of the method is not limited to this scene but may be used in other similar scenes in which information needs to be filtered.

As for the example of grabbing a red envelop using the instant communication application, in order to grab the red envelop quickly, the user often continuously clicks the chat screen of his/her handset when the red envelop is about to be received (e.g., the user has known in advance that someone is to give the red envelop), so as to shorten intrinsic delay of human beings in reacting to the arrival of the red envelop. In this case, some situations as follows are likely to occur which interfere with the user's grabbing the red envelop.

For example, on the chat screen there is suddenly displayed a wide picture sent by someone, and the user clicks this picture by accident in the process of continuously clicking the chat screen so that this picture is displayed in full screen. Obviously, the timing to grab a red envelop will certainly be missed or delayed, if the red envelop arrives at this moment.

In another example, on the chat screen there is displayed a long picture sent by someone, and the user has to manually drag the screen at its bottom upwards by himself or herself to skip this picture. This also affects timely clicking of the red envelop.

In yet another example, on the chat screen there are displayed some repeated chat words ceaselessly sent by some ones or some pictures (even if these pictures are relatively small) repeatedly sent by some ones. These repeatedly sent information also occupies screen spaces, and need to be manually removed by the user so as to see the arrived red envelop as soon as possible.

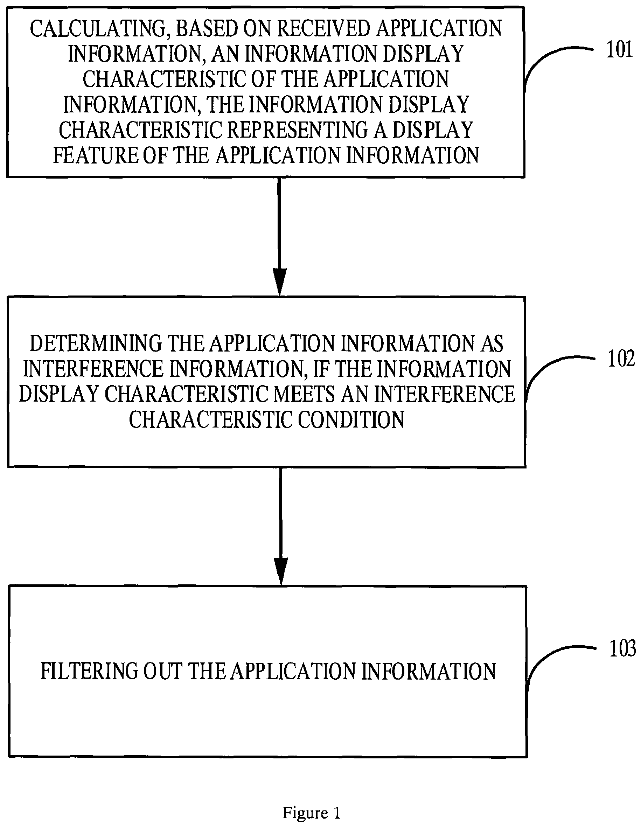

In order to quickly filter out the above enumerated interference information interfering with the grabbing of the red envelop and other similar interference information not enumerated, an embodiment of the present invention provides an information filtering method as shown in Fig. 1. The method may comprise the following steps.

In Step 101, based on received application information, an information display characteristic of the application information is calculated, the information display characteristic representing a display feature of the application information.

In the exemplary embodiment, the application information may be information received or sent in an application. For example, for an instant communication application, a message sent in a multi-person chat group is considered to be application information. When an instant communication client in a handset receives application information sent by someone, this step may be executed to calculate information display characteristic of the application information prior to displaying the application information on a chat interface.

The information display characteristic referred to herein may include, for example, which positional area on the chat interface (or a handset screen) the information is displayed in. Display coordinates indicating a display position may be used to represent a positional area. For the instant communication client, display coordinates of some application information may be obtained. In another example, the information display characteristic may further include an abstract of the information. As different application information has different abstracts, an abstract may be used to determine whether its corresponding information is repeated information which has been displayed previously. Thus, whether the information is repeatedly received may also be considered as a display feature of the information.

Of course, the information display characteristic may also be some other characteristic, although only two kinds of information display characteristics are enumerated here. The purposes of calculating the information display characteristic by the instant communication client may be to: determine, according to the information display characteristic, whether the application information will affect the user's efficiency of acquiring target information and/or whether the application information will be interference information which the user does not want to see, if the application information is normally displayed on the screen interface; and based thereon further determine how to display the application information on the screen interface. For details about how to determine and display based on the information display characteristic, reference can be made further to step 102.

In Step 102, the application information is determined as interference information, if the information display characteristic meets an interference characteristic condition.

In this step, the "interference characteristic condition" needs to be determined in advance, prior to determining how to display the information according to the information display characteristic of the application information in the step 101. The interference characteristic condition may serve as a basis for judging whether the received application information is interference information to target information. Still taking the red envelop as an example, assuming that the user continuously clicks the screen in order to acquire the red envelop as fast as possible, then the red envelop is the target information which the user wants to obtain, while other information may be considered as the interference information hindering the user from acquiring the red envelop, such as the above-enumerated situations which interfere with the user's grabbing the red envelop. For example, one of the situations is that the application information is a wide picture. When the user clicks the picture by accident in the process of continuously clicking the chat screen, the picture is displayed in full screen, thereby affecting the acquisition of the red envelop. Therefore, if it is determined according to the interference characteristic condition that the display of the application information impedes the target information, the instant communication client will adjust the manner for displaying the information.

For example, the interference characteristic condition may be determined in various manners according to a feature of target information to be acquired by the user. For instance, in the example of grabbing the red envelop, as the user's habit of clicking the screen, the user tends to continuously click the vicinity of a central position on the chat interface so as to click the red envelop. Then, if the picture is too wide and extends beyond the central position on the screen, it is likely for the user to click this picture by accident. In this case, the central position on the screen may be taken as a limit, and "the edge of the picture reaches or extends beyond the central position" is taken as an interference characteristic condition; that is, if the edge of the picture reaches the central position, it means that the interference characteristic condition is met. This is just one example, and the interference characteristic condition is not limited thereto in specific implementations. The interference characteristic condition may be determined according to the manner for the user to acquire the target information, the feature of the target information, etc.

In Step 103, the application information is filtered out.

For example, filtering out the application information in this step may involve: diminishing a wide picture so as to make it narrow, or replacing the picture with a marker instead of displaying it directly. For example, a marker is displayed at a position where the application information should have been displayed, and the user may know from the marker that the application information has arrived. The instant communication client may adopt various manners to adjust the display of the application information that meets the interference characteristic condition to reduce the influence of the application information on the target information.

It should be noted that the information filtering method of this embodiment may also provide the user with an option of whether to start the method. For example, still taking the instant communication client as an example, when many people are chatting together, some user perhaps does not want the interference information to be filtered out even if he/she participates in grabbing the red envelop. Therefore, the instant communication client may provide a human-machine interaction interface option, such that the user may select whether to start an information filtering function by himself or herself. When the user selects to use the information filtering function, the user may also be allowed to select which kind of information the target information is, so as to improve the accuracy of filtering out the interference information to various target information.

With the information filtering method of this embodiment, information is filtered by calculating the information display characteristic of the application information to be displayed and determining whether the application information is interference information according to the information display characteristic, thereby enabling the interference information to be filtered out automatically and quickly and hence improving the efficiency of acquiring the target information.

By still taking, as an example, grabbing the red envelop in the instant communication application with the target information being the red envelop, an information filtering method for filtering out interference information in the process of grabbing the red envelop is described. In addition, in this example, the interference information is determined as three kinds of information, including a wide picture, a long picture and repeated information (repeated words or repeated pictures, for example). In specific implementations, the interference information may include other types of information.

In this example, the interference characteristic condition of the interference information may be determined as, for example, "if information is displayed, display coordinates of the information fall within an interference coordinate range". For example, the interference coordinate range may be set as: "being greater than or equal to cl in terms of length of a picture", in order to limit a long picture (due to display of the long picture, the user needs to drag the picture upwards manually till its bottom shows up); and/or "being greater than or equal to k1 in terms of width of a picture", in order to limit a wide picture. Alternatively, the limit on the width may also be set as: "if a picture is displayed beginning from the left edge of the screen (supposing a sender of application information is presented at the left end of the chat interface), the right edge of the picture has a coordinate greater than or equal to xl in X axis (in case the origin of the X axis is at the left end); and/or if the picture is displayed from the right edge of the screen (supposing a sender of application information is presented at the right end of the chat interface), the left edge of the picture has a coordinate greater than or equal to x2 in X axis (in case the origin of the x coordinate is in the right end)". In this embodiment, description is given by taking, as an example, making a judgment for the width according to the coordinate of the right edge of the picture. In order to limit repeated information, in this embodiment, the abstract of the information may be calculated, and "the abstract is repeated" may be taken as the interference characteristic condition.

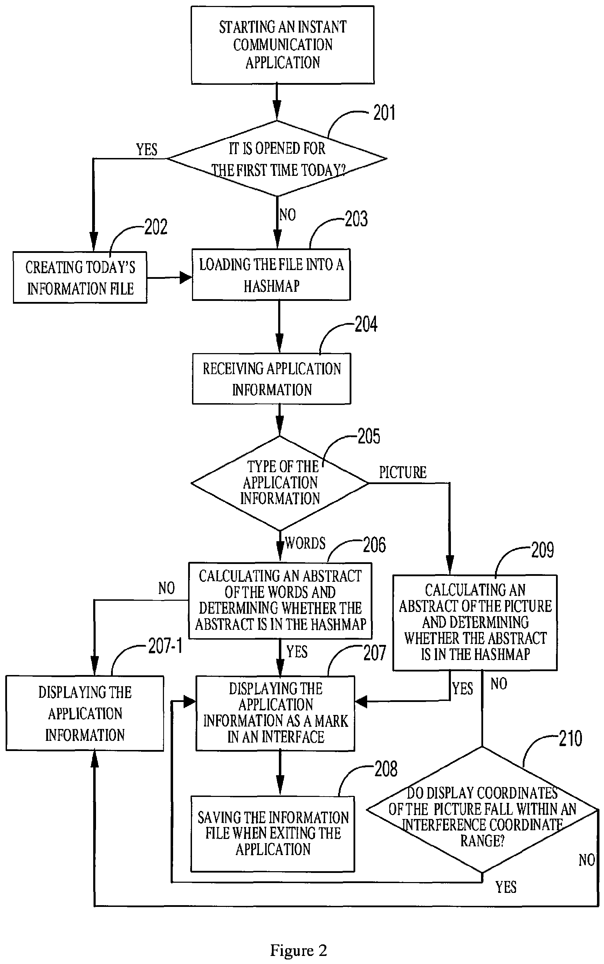

In the following, an exemplary flow of how to filter out the interference information to the red envelop according to the interference characteristic condition after determining the interference characteristic condition will be described with reference to Fig. 2.

In Step 201, it is determined whether an application is opened for the first time.

For example, when an instant communication client on a handset is started by the user, the instant communication application will judge whether this start is the first start within a preset time period. The setting of the "preset time period" is mainly for reducing storage space as much as possible required for storing, in the subsequent step, information on the basis of which it is judged whether there is repeated information. For example, in this example, the "preset time period" is set to be one day, namely from 0:00 to 24:00.

Thus, in this step, the instant communication client may judge whether the application is opened for the first time today. If yes, step 202 is executed; otherwise, step 203 is executed.

In Step 202, an information file corresponding to a preset time period is created.

For example, by still taking an example in which the preset time period is one day, the instant communication client creates an information file corresponding to today in this step, when determining that the client is started for the first time today. In addition, an information file of yesterday is deleted for reducing occupied storage space as much as possible.

The information file created in this step is for storing an abstract of each application information received within the preset time period. For example, when the instant communication client is started for the first time today, an information file corresponding to today is created. Then, abstracts of application information (application information of an instant communication application) subsequently received today by the client are stored in the information file, for subsequently judging according to the stored abstracts whether the received application information is repeated. For example, the information file may be named as filehashdb.20160307, which includes a date to facilitate distinguishing and deleting information files outside the preset time period. After creating the information file, the process proceeds to step 203.

In Step 203, the file is loaded into a hashmap for subsequent quick search.

For example, if the instant communication client is not started for the first time, it indicates that an information file corresponding to today has been stored locally, and this file may have been loaded into a hashmap. The hashmap is conducive to searching for a repeated abstract subsequently, thereby improving the search efficiency.

On the other hand, if the instant communication client is started for the first time, after an information file corresponding to today is created in the step 202, the information file may be loaded into a hashmap in this step. Then, abstracts of subsequently received application information may be stored and searched by using the hashmap.

In Step 204, application information is received.

For example, the received application information may be such kinds of information as words or a picture sent by someone and received in a multi-person chat group.

In Step 205, it is judged whether the type of the application information is a picture or words.

If it is words, step 206 is executed.

If it is a picture, step 209 is executed.

In Step 206, an abstract of the words is calculated and it is judged whether the abstract is in the hashmap.

For example, the abstract may be calculated using an algorithm, such as md5, and it is determined whether the abstract is stored in the today's information. The abstract calculated herein may be used as an information display characteristic of the application information received in the step 204.

If an abstract identical to the calculated abstract is stored in today's hashmap, it means that the information display characteristic meets the interference characteristic condition. That is, the application information is repeated information, and the same application information has been received previously. Then, step 207 is executed. Otherwise, if there is no identical abstract in the hashmap (i.e., it is not in today's information file), it means that this application information is received for the first time today. Then, step 207-1 is executed.

In Step 207, the application information is displayed as a marker in an interface.

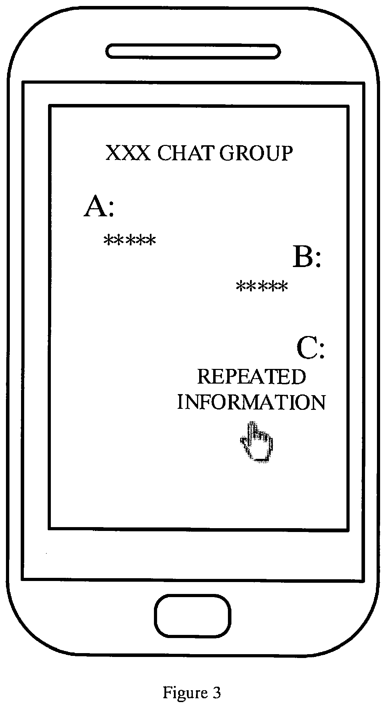

For example, a marker may be correspondingly displayed at a display position of the application information. The marker indicates that the application information has been received. The form of the marker is not limited. For example, Fig. 3 illustrates a display form of the marker. As illustrated, "repeated information" may be displayed to prompt a user.

If the user still wants to normally display the application information, the user may click to select the marker. Then, the instant communication client may receive a display instruction from the user with respect to the marker, and display the application information at a display position where the application information should have been displayed. Then, the process turns to step 208.

In Step 207-1, the application information is displayed, and then step 208 is executed.

In Step 208, when the application is exited, the hashmap is serialized and stored for next use.

For example, when the instant communication application is exited the hashmap is stored locally in a handset in a serialized manner, such that when the application is started next time abstracts can be stored and searched for using the hashmap. The so-called sterilization refers to a process of converting a variable in the memory into a storable or transmittable form.

In Step 209, an abstract of the picture is calculated and it is judged whether the abstract is in the hashmap.

This step is similar to step 206, and will not be described in detail. If the abstract of the picture is in the information file, step 207 is executed; otherwise, the process proceeds to step 210.

In Step 210, it is judged whether display coordinates of the picture fall within a preset interference coordinate range.

For example, in this step, the calculated information display characteristic of the picture is the display coordinates of the picture and may mainly include a display length of the picture and a display width of the picture. In terms of width, the right edge of the picture when it is displayed on the interface may be calculated in this embodiment.

If the picture length exceeds a preset length limit c1 or the coordinate of the right edge of the picture exceeds a preset coordinate x1, it means that the user needs to manually drag the picture upwards till its bottom shows up if the picture is displayed normally or that if the picture is opened due to being clicked by accident the picture displayed constitutes interference information. Then, step 207 is executed. Otherwise, if both the length and the width of the picture fall within the interference coordinate range, it means that the display of the picture may not affect the acquisition of the target information. Then, step 207-1 is executed.

Furthermore, the interference coordinate range may be determined as a matter of experience, or may be obtained through statistical processing based on historically recoded data on ranges in which target information is acquired. For example, the instant communication client may record an average coordinate value of a preset number of positions, at a respective one of which the user clicks the screen each time in a process of continuously clicking the screen to grab the red envelope. For example, coordinate values of nearly 10 positions, at a respective one of which the user clicks the screen each time, may be recorded and averaged to obtain an x coordinate which is taken as a basis for determining a coordinate limit x1 for the right edge of the picture. In this manner, the interference coordinate range can be determined according to the usage habits of the user, and it can be determined more accurately whether the application information hinders the user from acquiring the target information.

In the example as shown in Fig. 2, judging whether the picture displayed constitutes interference information involves: first judging whether the picture is repeated information; and then judging whether display coordinates of the picture (such as the length and the width of the picture) fall within the interference coordinate range, when the picture is determined not to be repeated information. In specific implementations, the sequence of judgments made for the picture is not limited. For example, it is possible to first judge whether the display coordinates of the picture (such as the length and the width of the picture) fall within the interference coordinate range. If yes, a marker is displayed directly; otherwise, it is then judged whether the picture is repeated.

Furthermore, in the example as shown in Fig. 2, for determining the interference information that affects grabbing the red envelop, it is judged comprehensively whether the application information including words and pictures is repeated or whether the display coordinates fall within the interference coordinate range. There may be other implementations. For example, it is judged for only application information of the word type whether the information is repeated; or only application information of the picture type is subject to interference identification. These implementations may be used separately or in combination flexibly.

With the information filtering method of this embodiment, the information display characteristic of such types of information as words and pictures among the application information to be displayed. Based thereon, repeated information or a wide or long picture may be determined. As such, the wide or long picture or the repeated information may be filtered out effectively and quickly, thereby reducing the interference to the user's acquiring the target information and improving the efficiency of acquiring the target information.

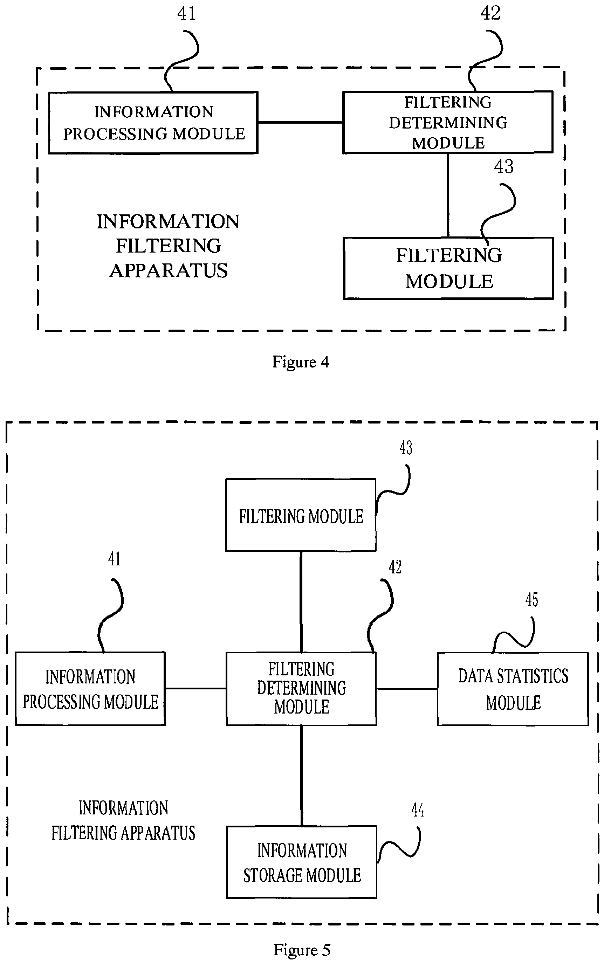

In order to perform the above information filtering method, embodiments of this invention also provide an information filtering apparatus. As shown in Fig. 4, the apparatus comprises an information processing module 41, a filtering determining module 42 and a filtering module 43.

The information processing module 41 is configured to calculate, based on received application information, an information display characteristic of the application information, the information display characteristic representing a display feature of the application information.

The filtering determining module 42 is configured to determine the application information as interference information, if the information display characteristic meets an interference characteristic condition.

The filtering module 43 is configured to filter out the application information.

In an example, the information display characteristic is an abstract of the application information. The filtering determining module 42 is configured to compare the abstract of the application information with stored abstracts and to determine the application information as interference information if an abstract identical to the abstract of the application information exists in the stored abstracts.

In an example, the information display characteristic is display coordinates of the application information when the application information is displayed. The filtering determining module 42 is configured to determine the application information as interference information if the display coordinates fall within a preset interference coordinate range.

In an example, the filtering module 43 is configured to: display a marker at a display position of the application information, the marker indicating that the application information has been received. The filtering module 43 is further configured to display the application information at the display position if a display instruction from a user with respect to the marker is received.

For example, the application information is application information of an instant communication application.

Referring to Fig. 5, the apparatus may further comprise: an information storing module 44 configured to store an information file corresponding to a preset time period, the information file storing an abstract of each application information received in the preset time period. The filtering determining module 42 is configured to determine the application information as interference information if the information file has stored an abstract identical to the abstract of the application information.

In an example, the apparatus may further comprise: a data statistics module 45 configured to acquire historically recorded data on ranges in which target information is acquired and to obtain the interference coordinate range through statistical processing based on the data of the ranges.

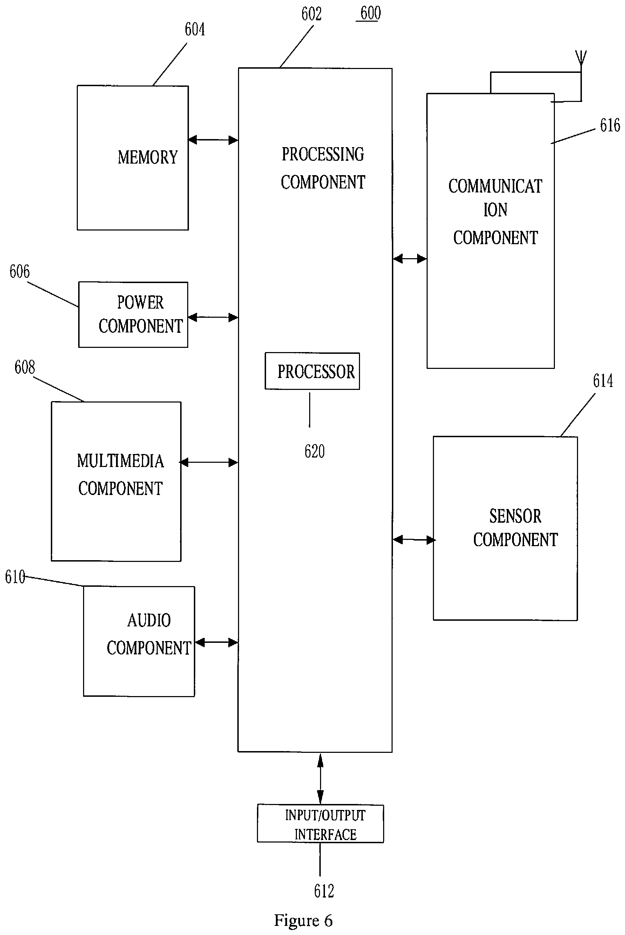

Fig. 6 is a block diagram of a smart terminal 600 according to an exemplary embodiment of the invention. For example, the smart terminal 600 may be a mobile phone, a computer, a digital broadcast terminal, a message transceiver device, a game console, a tablet device, a medical device, fitness equipment, a personal digital assistant or the like.

Referring to Fig. 6, the smart terminal 600 may comprise one or more following components: a processing component 602, a memory 604, a power component 606, a multimedia component 608, an audio component 610, an input/output (I/O) interface 612, a sensor component 614 and a communication component 616.

The processing component 602 typically controls overall operations of the terminal 600, such as the operations associated with display, telephone calls, data communications, camera operations and recording operations. The processing component 602 may include one or more processors 620 to execute instructions to perform all or part of the steps in the above described methods. Moreover, the processing component 602 may include one or more modules which facilitate the interaction between the processing component 602 and other components. For example, the processing component 602 may comprise a multimedia module to facilitate the interaction between the multimedia component 608 and the processing component 602.

The memory 604 is configured to store various types of data to support the operation of the terminal 600. Examples of such data comprise instructions for any applications or methods operated on the terminal 600, various kinds of data, messages, pictures, video, etc. The memory 604 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

In this embodiment, the memory 604 stores instructions executable by the processor. The processor is configured to execute the instructions to: calculate, based on received application information, an information display characteristic of the application information, the information display characteristic representing a display feature of the application information; determine the application information as interference information, if the information display characteristic meets an interference characteristic condition; and filter out the application information.

The power component 606 provides power to various components of the terminal 600. The power component 606 may comprise a power management system, one or more power sources, and any other components associated with the generation, management, and distribution of power in the terminal 600.

The multimedia component 608 comprises a screen providing an output interface between the terminal 600 and the user. In some embodiments, the screen may comprise a liquid crystal display (LCD) and a touch panel (TP). If the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and the rear camera may receive an external multimedia datum while the terminal 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the terminal 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and peripheral interface modules, such as a keyboard, a click wheel, buttons, and the like. The buttons may include, but are not limited to, a home button, a volume button, a starting button, and a locking button.

The sensor component 614 comprises one or more sensors to provide status assessments of various aspects of the terminal 600. For instance, the sensor component 614 may detect an open/closed status of the terminal 600, relative positioning of components, e.g., the display and the keypad, of the terminal 600, a change in position of the terminal 600 or a component of the terminal 600, presence or absence of user's contact with the terminal 600, an orientation or an acceleration/deceleration of the terminal 600, and a change in temperature of the terminal 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor or a temperature sensor.

The communication component 616 is configured to facilitate communication, wired or wirelessly, between the terminal 600 and other devices. The terminal 600 can access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 604, executable by the processor 620 in the terminal 600, for performing the above-described methods. For example, the method comprises: calculating, based on received application information, an information display characteristic of application information, the information display characteristic representing a display feature of the application information; determining the application information as interference information, if the information display characteristic meets an interference characteristic condition; and filtering out the application information. For example, the non-transitory computer-readable storage medium may be a ROM, a RAM, a CD-ROM, a magnetic tape, a floppy disc, an optical data storage device or the like.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. The specification and examples are intended to be exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. An information filtering method performed by a terminal, comprising:
calculating (101), based on received application information, an information display characteristic of the application information, the information display characteristic representing a display feature of the application information,;
determining (102) the application information as interference information, if the information display characteristic meets an interference characteristic condition; and
filtering (103) out the application information.

2. The method according to claim 1, wherein the information display characteristic is an abstract of the application information; and
determining the application information as interference information if the information display characteristic meets the interference characteristic condition comprises: comparing the abstract of the application information with stored abstracts, and determining the application information as interference information if an abstract identical to the abstract of the application information exists in the stored abstracts.

3. The method according to claim 2, further comprising:
storing an information file corresponding to a preset time period, the information file storing an abstract of each application information received in the preset time period, wherein
the information display characteristic meets the interference characteristic condition, if an abstract identical to the abstract of the application information is stored in the information file.

4. The method according to claim 1, wherein the information display characteristic is display coordinates of the application information when the application information is displayed; and
determining the application information as interference information if the information display characteristic meets the interference characteristic condition comprises: determining the application information as interference information if the display coordinates fall within a preset interference coordinate range.

5. The method according to claim 4, further comprising:
acquiring historically recorded data on ranges in which target information is acquired; and
obtaining the preset interference coordinate range interfering with the target information through statistical processing based on the data on the ranges.

6. The method according to claim 1, wherein filtering out the application information comprises:
displaying a marker at a display position of the application information, the marker indicating that the application information has been received; and
displaying the application information at the display position, if a display instruction from a user with respect to the marker is received.

7. The method according to any of claims 1-6, wherein the application information is application information of an instant communication application.

8. An information filtering apparatus, comprising:
an information processing module (41) configured to calculate, based on received application information, an information display characteristic of the application information, the information display characteristic representing a display feature of the application information;
a filtering determining module (42) configured to determine the application information as interference information, if the information display characteristic meets an interference characteristic condition; and
a filtering module (43) configured to filter out the application information.

9. The apparatus according to claim 8, wherein the information display characteristic is an abstract of the application information; and
the filtering determining module (42) is configured to compare the abstract of the application information with stored abstracts and to determine the application information as interference information if an abstract identical to the abstract of the application information exists in the stored abstracts.

10. The apparatus according to claim 9, further comprising: an information storing module (44) configured to store an information file corresponding to a preset time period, the information file storing an abstract of each application information received in the preset time period, wherein
the filtering determining module (42) is configured to determine the application information as interference information if the information file has stored an abstract identical to the abstract of the application information.

11. The apparatus according to claim 8, wherein the information display characteristic is display coordinates of the application information when the application information is displayed; and
the filtering determining module (42) is configured to determine the application information as interference information if the display coordinates fall within a preset interference coordinate range.

12. The apparatus according to claim 11, further comprising: a data statistics module (45) configured to acquire historically recorded data on ranges in which target information is acquired and to obtain the preset interference coordinate range interfering with the target information through statistical processing based on the data on the ranges.

13. A smart terminal, comprising:
a processor (620); and
a memory (604) configured to store instructions executable by the processor (620),
wherein the processor (620) is configured to perform the method according to any of claims 1-7.

14. A computer program including instructions for executing the steps of an information filtering method according to any one of claims 1 to 7, when said program is executed by a computer.

15. A recording medium readable by a computer and having recorded thereon a computer program including instructions for executing the steps of an information filtering method according to any one of claims 1 to 7.
